# EUROPÄISCHE PATENTANMELDUNG

(11) **EP 1 282 316 A2**
(43) Veröffentlichungstag der Anmeldung: **05.02.2003**
(21) Anmeldenummer: 02017005.6
(22) Anmeldetag: 27.07.2002
(51) Int. Cl.: H04N 7/24, H04N 5/00

(54) **Verfahren zum Aktualisieren und/oder Austauschen von Betriebssoftware oder Daten in unterhaltungselektronischen Kommunikations- und Informationsgeräten**

(30) Priorität: 31.07.2001 DE 10137858
(71) Anmelder: LOEWE OPTA GmbH, 96317 Kronach (DE)
(72) Erfinder: Bach, Uwe, Dr.-Ing., 96515 Sonneberg (DE); Schlee, Dieter, Dipl.-Ing., 96264 Altenkunstadt (DE)

(57) **Zusammenfassung**

Die Erfindung betrifft ein Verfahren zum Aktualisieren und/oder Austauschen von Betriebssoftware oder Daten für die bestimmungsgemäße Programmierung von unterhaltungselektronischen Kommunikations- und Informationsgeräten zur Steuerung von Bedienfunktionen oder zur Auswertung empfangbarer ausgewählter Informationen, die mittels Rundfunksignalen übertragen und empfangen werden oder über Interaktionskanäle von einem zentralen Rechner oder von einer angekoppelten externen Quelle abrufbar und in einem nichtflüchtigen Hauptspeicher in dem Gerät abspeicherbar sind. Während des Datenaustausches oder der Aktualisierung werden die vorherigen Betriebssoftwaredaten in einen nichtflüchtigen Zwischenspeicher kopiert und die empfangenen Austausch- oder Aktualisierungsdaten zunächst in einem flüchtigen Speicher zwischengespeichert, bevor sie in den Hauptspeicher übertragen werden.

## Beschreibung

Die Erfindung betrifft ein Verfahren zum Aktualisieren und/oder Austauschen von Betriebssoftware oder Daten für die bestimmungsgemäße Programmierung von unterhaltungselektronischen Kommunikations- und Informationsgeräten zur Steuerung von Bedienfunktionen oder zur Auswertung empfangbarer ausgewählter Informationen, die mittels Rundfunksignalen übertragen und empfangen werden oder über Interaktionskanäle von einem zentralen Rechner oder von einer angekoppelten externen Quelle abrufbar und in einem nichtflüchtigen Hauptspeicher in dem Gerät abspeicherbar sind.

Aus der DE 38 15 071 C 2 ist ein Verfahren zur bestimmungsgemäßen Programmierung eines Bildschirmtextgerätes, das Bestandteil eines Fernsehgerätes sein kann, am Ort des Einsatzes bekannt. Das Fernsehgerät weist eine Kommunikationsschnittstelle zu einem Kommunikationsnetz, wie Telefonnetz, auf und ist hierüber mit Software ladbar. Bei der Erstinbetriebnahme wird automatisch eine Verbindung zwischen einem Kommunikationsprozessor des Gerätes und einem externen Rechner hergestellt, die Speicherkapazität dem externen Rechner mitgeteilt, ebenso die internen und externen Schnittstellen und die Funktionalitätsmerkmale des Gerätes. Der externe Rechner ermittelt die Softwaremodule, die geladen werden können, und stellt diese zur Auswahl bereit. Die Softwaremodule werden sodann auf Anforderung abgerufen und in einem nichtflüchtigen Speicher abgespeichert. Die abgerufenen Softwaremodule sind Betriebssoftwaremodule und dienen zur Steuerung der Gerätefunktionen sowie eventueller weiterer Leistungsmerkmale des Gerätes. Z.B. können hierüber die Fernsehkanäle eingespeichert werden, die am Aufstellort Berlin über das dortige Kabelnetz empfangbar sind.

Im Rahmen neuer digitaler Übertragungsstandards ist die Übertragung von Software, z.B. beim DAB-, DVB-, GSM- und UMTS-System, angedacht. Mit diesen Übertragungsverfahren können auch komplexe Datenmengen, wie sie bei Softwaremodulen vorhanden sind, schnell und preiswert übertragen werden.

Aus der US 5,937,198 ist ein Download-Verfahren für Software bekannt, bei dem das aus einem RAM-Speicher in einen Flash-Speicher geladene Programm direkt vom empfangenen Programm überschrieben wird.

Der Erfindung liegt die Aufgabe zugrunde, ein Verfahren der gattungsgemäßen Art so weiterzubilden, dass eine sichere Betriebssoftware-Aktualisierung oder ein Betriebssoftware-Austausch auf einfache Weise möglich ist, auch dann, wenn die Betriebssoftware von einem Empfänger, der üblicherweise für andere Anwendungen ausgelegt ist, empfangen wird. Ein weiteres Ziel ist es, die Funktion des Gerätes auch dann sicherzustellen, wenn die Übertragung der Betriebssoftware gestört ist.

Gelöst wird die Aufgabe durch die im Anspruch 1 angegebenen Verfahrensschritte. Durch die Erfindung wird sichergestellt, dass auch bei gestörtem Over Air Downloading und bei Abbruch der Speicherung der empfangenen Software das entsprechende Gerät betriebsbereit und in dem alten Betriebszustand verbleibt, bis eine erfolgreiche Aktualisierung oder ein erfolgreicher Datenaustausch abgeschlossen ist.

Vorteilhafte weitere Verfahrensschritte sind in den Unteransprüchen 2 bis 15 selbsterklärend angegeben.

Im Unteranspruch 16 ist die Verwendung des erfindungsgemäßen Verfahrens bei Fernsehgeräten, Videorecordern oder Multimediageräten angegeben.

Neben Betriebssoftware können auch Programminformationen über empfangbare Programmbeiträge für einen Gerätenavigator oder für einen elektronischen Programmführer empfangen werden. Weiterhin können auch Programminformationen digitaler Datendienste und/oder Videospiele und/oder Videosignale begleitende Audioprogramme enthalten sein. Selbstverständlich können auch unabhängige Audioprogramme empfangen und nach dem gleichen Verfahren abgespeichert werden. Das erfindungsgemäße Verfahren ist also universell anwendbar auf Betriebssoftware zur Steuerung von Funktionen eines Empfangsgerätes. Für den Fall, dass mehrere Funktionen in einem Gerät gesondert gesteuert werden und hierfür Speicher und Mikroprozessoren vorgesehen sind, ist es möglich, zum Datenaustausch der Programmdaten nur einen einzigen nichtflüchtigen Kurzspeicher vorzusehen, um die Austauschprogramme oder Aktualisierungsdaten für alle Module zur Sicherung zwischenzuspeichern. Der Rechner des Empfangsmoduls kopiert nach der Initialisierung des Datenaustausch- oder Aktualisierungsprogramms die im Hauptspeicher abgespeicherte Betriebssoftware bzw. das entsprechende Betriebssoftwaremodul zunächst in einen dem Datenumfang entsprechend angepassten Speicherbereich oder in einen separaten nichtflüchtigen Speicher während die empfangenen Softwaremodule zunächst in einem flüchtigen Speicher zwischengespeichert werden. Der nichtflüchtige Speicher kann beispielsweise ein Flash-ROM, ein E²PROM oder eine Harddisk sein. Die auszutauschende oder zu aktualisierende Betriebssoftware steht also in den nichtflüchtigen Speichern mindestens zweimal zur Verfügung. Stellt der Rechner fest, dass die Programmübertragung der empfangenen Betriebssoftwaremodule oder Austauschdaten gestört war, dass Daten fehlen, so wird überhaupt kein Versuch gemacht, die im nichtflüchtigen Hauptspeicher gespeicherte Software zu überschreiben oder Teile davon zu aktualisieren oder zu ergänzen. Nach Feststellung plausibler Daten wird der Austausch oder die Aktualisierung vorgenommen. Dabei kann es zu Havarien kommen, der Überschreibprozess kann gestört werden, oder sonstige Einflüsse bewirken, dass das Programm dann nicht mehr zum Laufen gebracht werden kann. Stellt dies der Rechner fest, wird gemäß der Erfindung die vermeintlich aktualisierte oder ausgetauschte Software gelöscht oder von der zur Sicherung zwischengespeicherten überschrieben oder es findet ein Austausch statt. Dadurch ist in jedem Fall sichergestellt, dass die Betriebsbereitschaft des Gerätes nicht gestört ist.

Das Verfahren ist auch anwendbar auf den Empfang von Betriebssoftware für Peripheriegeräte, die an dem Empfangsgerät über einen Bus angeschlossen sind. In diesem Fall sorgt der Rechner des Empfangsgerätes dafür, dass über die Busschnittstelle das entsprechende Peripheriegerät, z.B. ein Videorecorder, der an ein Fernsehgerät angeschlossen ist, für den Datenaustausch aktiviert wird, wobei die im nichtflüchtigen Hauptspeicher des Peripheriegerätes abgespeicherte Betriebssoftware in einen Speicherbereich desselben oder in einen weiteren nichtflüchtigen Kurzzeitspeicher im Peripheriegerät oder in einen solchen in dem Empfangsgerät kopiert werden kann.

Die Betriebssoftware kann auch an bestimmte Geräte adressiert, übertragen und von diesen empfangen werden. In diesem Fall wird zunächst nach der Adresse gesucht, bevor der Empfänger für den Datenaustausch oder die Aktualisierung aktiv schaltet. Das Suchen nach der Adresse kann aber auch in dem eingeleiteten Betriebszustand erfolgen. Handelt es sich bei der Betriebssoftware beispielsweise um eine solche, die EPG-Daten (Electronic Program Guide-Daten) verarbeitet, die sich laufend ändern, so empfiehlt es sich, ein Fernsehempfangsgerät in den Aktualisierungsmodus oder Austauschmodus zu solchen Tageszeiten, vorzugsweise Nachtzeiten, aktiv zu schalten, was auf einfache Weise durch eine Zeitsteuereinrichtung im Empfänger bewerkstelligt werden kann, und nur die Daten auszutauschen oder ergänzen. Die Steuerung ist aber auch durch ein Zeitsignal durchführbar, das mitgesendet wird. Alternativ kann mittels eines zweiten Empfangsstandards der Download im Hintergrund erfolgen.

Im Falle der Adressierung bei der Übertragung von Betriebssoftware, beispielsweise der Betriebssoftware für einen bestimmten Fernsehempfänger eines bestimmten Herstellers, empfiehlt es sich darüber hinaus, die Daten verschlüsselt zu übertragen und mittels eines Decoders zu entschlüsseln, bevor die Software ausgetauscht wird.

Auch ist möglich, Zugangsberechtigungen zum Empfang von Austauschsoftware zu definieren und das Empfangsgerät entsprechend zu initialisieren.

## Patentansprüche

1. Verfahren zum Aktualisieren und/oder Austauschen von Betriebssoftware oder Daten für die bestimmungsgemäße Programmierung von unterhaltungselektronischen Kommunikations- und Informationsgeräten zur Steuerung von Bedienfunktionen oder zur Auswertung empfangbarer ausgewählter Informationen, die mittels Rundfunksignalen übertragen und empfangen werden oder über Interaktionskanäle von einem zentralen Rechner oder von einer angekoppelten externen Quelle abrufbar und in einem nichtflüchtigen Hauptspeicher in dem Gerät abspeicherbar sind, **gekennzeichnet durch** folgende Verfahrensschritte:
- Aktivieren eines Austauschprogramms in dem Empfangsgerät für den Empfang der Daten der Betriebssoftware **durch** manuelle oder automatische zeitliche Steuerung,
- Kopieren der auszutauschenden oder zu aktualisierenden, in einem nichtflüchtigen Speicher abgespeicherten Betriebssoftware in einen nichtflüchtigen Kurzzeitdatenspeicher unter der gleichen Bezeichnung bzw. Identifikation, unter der das Aktualisierungs- oder Austauschprogramm gesendet wird,
- Empfangen und Selektieren der neuen Betriebssoftware oder der Aktualisierungsdaten mit der gleichen Adresse und Zwischenspeichern derselben in einem flüchtigen Speicher,
- Übertragen der im flüchtigen Zwischenspeicher abgespeicherten Software oder Aktualisierungsdaten in den nichtflüchtigen Hauptspeicher und Überschreiben oder Aktualisieren der bereits vorhandenen Software oder Daten,
- Überprüfen des Ladevorgangs des Hauptspeichers mittels Mikroprozessor und im Falle der Havarie des Ladevorgangs Abbruch desselben und Übernahme der in dem nichtflüchtigen Kurzzeitdatenspeicher abgelegten Kopie in den nichtflüchtigen Hauptspeicher bei gleichzeitigem oder vorherigem Löschen der Betriebssoftware in dem Hauptspeicher unter der gleichen Adresse,
- Neustart des Austauschprogramms, falls Aktualisierung oder Austausch gewünscht ist.

2. Verfahren nach Anspruch 1, **dadurch gekennzeichnet, dass** die Betriebssoftware Programminformationen über empfangbare Programmbeiträge einzelner Services für einen Gerätenavigator oder für einen elektronischen Programmführer enthält, die periodisch aktualisiert werden, und dass eine Zeitsteuerschaltung eine automatische Einleitung des Verfahrens steuert und in Abhängigkeit von den Enddaten einer Übertragung der Datenempfänger aus dem aktiven in den nichtaktiven Zustand umschaltet.

3. Verfahren nach Anspruch 1, **dadurch gekennzeichnet, dass** die Betriebssoftware Programminformationen digitaler Datendienste und/oder Videosignale und/oder Videosignale begleitende und/oder unabhängige Audioprogramme enthält.

4. Verfahren nach Anspruch 1, **dadurch gekennzeichnet, dass** die Betriebssoftware über einen digitalen Datenempfänger über digitale Datenschnittstellen in dem Datenempfänger an adaptierte interne Module und/oder über lokale und/oder über ein Netzwerk an adaptierte externe Geräte abgegeben wird, wenn diese adressiert sind.

5. Verfahren nach Anspruch 4, **dadurch gekennzeichnet, dass** jedes der internen Module einen Hauptspeicher aufweist und dass ein gemeinsamer nichtflüchtiger Kurzzeitspeicher vorgesehen ist, der eine Speicherkapazität besitzt, um die Austauschprogramme oder Aktualisierungsdaten zur Sicherung zwischenzuspeichern.

6. Verfahren nach Anspruch 1, **dadurch gekennzeichnet, dass** die empfangene Software die Betriebssoftware zur Bedienung der Funktionen eines Multimediagerätes ist.

7. Verfahren nach Anspruch 1, **dadurch gekennzeichnet, dass** die Betriebssoftware in standardisierter oder in proprietärer Form im Rundfunkkanal innerhalb eines Datenkarussells eingefügt und periodisch übertragen wird.

8. Verfahren nach Anspruch 1 oder 7, **dadurch gekennzeichnet, dass** senderseitig die Softwareaktualisierung zeitgesteuert initiiert wird und in Abhängigkeit von einem Zeitsignal oder zeitsynchron die Empfängerschaltung aktiviert wird.

9. Verfahren nach einem der vorhergehenden Ansprüche, **dadurch gekennzeichnet, dass** die Daten verschlüsselt übertragen werden und dass der Datenempfänger ein Entschlüsselungssystem aufweist, das die Daten entschlüsselt, bevor sie in dem flüchtigen Speicher abgespeichert oder nachdem sie aus in dem flüchtigen Speicher verschlüsselt gespeichert ausgelesen und in den nichtflüchtigen Hauptspeicher eingeschrieben werden.

10. Verfahren nach einem der vorhergehenden Ansprüche, **dadurch gekennzeichnet, dass** die übertragene Betriebssoftware in Datenpakete unterteilt ist, die Softwareadressen und/oder Zuordnungskennungen zu Modulen oder Geräten aufweisen, und dass der Datenempfänger anhand der Adressen ermittelt, zu welchem zu steuernden Gerät die Software gehört, und dass in einem Speicher des Hauptgerätes und/oder in den angeschlossenen Peripheriegeräten sowie den Modulen des Hauptgerätes die Adressen diesen zugeordnet registriert sind und nur bei Übereinstimmung der Adressen mit denen der empfangenen Betriebssoftware abgespeichert werden.

11. Verfahren nach Anspruch 10, **dadurch gekennzeichnet, dass** die Übertragung von spezifischen Konfigurationsdaten die Selektion der entsprechenden Betriebssoftwaremodule für ein Gerät ermöglicht.

12. Verfahren nach Anspruch 9, 10 oder 11, **dadurch gekennzeichnet, dass** die Konfigurationsdaten das Entschlüsselungssystem mit steuern und die verschlüsselten individuell adressierten Daten entschlüsseln.

13. Verfahren nach Anspruch 9, 10, 11 oder 12, **dadurch gekennzeichnet, dass** die Daten nur dann selektiert werden, wenn ein Zugangsberechtigungsschlüssel eines Berechtigten den Zugang auf bestimmte Daten ermöglicht, wobei der Zugangsberechtigungsschlüssel fest im jeweiligen Gerät oder auf einem austauschbaren Speichermedium, insbesondere Chipkarte, abgespeichert ist und vom Zugangsberechtigten freigeschaltet wird, um den Empfänger für den Datenempfang zu aktivieren.

14. Verfahren nach Anspruch 1, 2 oder 8, **dadurch gekennzeichnet, dass** die Empfängerschaltung außerhalb der normalen Empfangszeit von Videound/oder Tonsignalen, vorzugsweise zur Nachtzeit, aktiviert ist.

15. Verfahren nach Anspruch 14, **dadurch gekennzeichnet, dass** anstelle der Zeitsteuerung ein zweiter Empfangskanal für den Datenempfang genutzt werden kann, dessen hauptsächliche Verwendung darin besteht, Audio- und Videodaten sowie Zusatzdaten für im Hintergrund aktive Applikationen ohne Beeinträchtigung der im Vordergrund aktiven Applikationen zu empfangen und zu verarbeiten.

16. Verfahren nach einem der vorhergehenden Ansprüche, **dadurch gekennzeichnet, dass** das Verfahren bei einem analogen oder digitalen Fernsehempfangsgerät, einem Videorecorder oder einem Multimediagerät angewendet wird.
